# EUROPÄISCHE PATENTSCHRIFT

(11) **EP 2 176 003 B1**
(45) Veröffentlichungstag und Bekanntmachung des Hinweises auf die Patenterteilung: **30.03.2011**
(21) Anmeldenummer: 08786209.0
(22) Anmeldetag: 17.07.2008
(51) Int. Cl.: B06B 1/18, G01F 11/24, G01N 1/20

(54) **DOSIEREINRICHTUNG**
METERING DEVICE
DISPOSITIF DE DOSAGE

(30) Priorität: 18.07.2007 DE 102007033388
(43) Veröffentlichungstag der Anmeldung: 21.04.2010
(73) Patentinhaber: FLSmidth Wuppertal GmbH, 42389 Wuppertal (DE)
(72) Erfinder: HAAS, Ernst, Michael, 42115 Wuppertal (DE)
(74) Vertreter: Rieder, Hans-Joachim
(86) Internationale Anmeldenummer: PCT/EP2008/059370
(87) Internationale Veröffentlichungsnummer: WO 2009/010553

(56) Entgegenhaltungen:
- DE-A1- 1 953 863
- DE-A1- 2 257 824
- DE-A1- 2 424 063
- DE-B- 1 924 653
- US-A- 2 467 791
- US-A- 5 544 683

## Beschreibung

Die vorliegende Erfindung betrifft eine Dosiereinrichtung zur bevorzugt volumetrischen Dosierung von rieselfähigem Material, vorzugsweise für eine Probenaufbereitungsvorrichtung zur Aufbereitung von rieselfähigem Probenmaterial, wobei die Dosiereinrichtung zumindest ein Dosiergefäß und eine ihm zum Vibrationsantrieb zugeordnete Vibrationsantriebseinrichtung aufweist.

Derartige Dosiereinrichtungen bzw. Probenaufbereitungsvorrichtungen dienen insbesondere zur Vorbereitung von Materialproben im Allgemeinen rieselfähiger Materialien (bspw. von Granulaten) für anschließende werkstoffkundliche Analysen. Für bestimmte Untersuchungen muss dabei zunächst eine vorbestimmte Menge des Probenmaterials möglichst genau separiert werden. Bekannte Automaten besitzen dazu einen sog. Dosierlöffel mit einem becherartigen Dosiergefäß, welches mittels einer horizontalen Schwenkachse um diese drehbar im Inneren eines Einfülltrichters gehalten ist. Darin wird von oben rieselfähiges Probenmaterial mit Überschuss eingefüllt, wodurch sich das Dosiergefäß zunächst füllt, sich dann auf dessen Oberfläche ein Schüttkegel bildet und überschüssiges Probenmaterial seitlich herabfällt und durch die Trichterwandung nach unten abgeführt wird. Zur volumetrischen Dosierung in dem becherartigen Dosierlöffel kann der Schüttkegel mit einem Abstreifer abgezogen werden. Um möglichst zu vermeiden, dass es auch abhängig von der Größe, Form und Oberflächenbeschaffenheit der Schüttkörper zu Schwankungen der Packungsdichte und dadurch Probenmenge im Dosierlöffel kommt, wird das Material vor dem Abstreifen des Schüttkegels durch Schwingungserregung verdichtet, wodurch reproduzierbarere Ergebnisse erhalten werden. Bei herkömmlichen Anlagen greift dazu an der Trichteraußenseite ein mechanischer bzw. elektromechanischer Schwingantrieb an, der den gesamten Trichter und den darin gehaltenen Dosierlöffel zu regelmäßigen Schwingungen anregt. Im Hinblick auf die große für die Erregung des Gesamtsystems benötigte Schwingungsenergie ist neben den Kosten für den Schwingungsantrieb als Nachteil auch eine erhebliche Geräuschentwicklung in Kauf zu nehmen. Auch kann bei bestimmten zu dosierenden Materialien, wie bspw. Schlacke, die Problematik auftreten, dass diese durch die elektromagnetischen Antriebe eine Aufladung erfährt und dadurch in unerwünschter Weise an Stahlteilen anhaftet. Diese Magnetisierung bleibt unter Umständen sogar über einen längeren Zeitraum erhalten und erschwert nicht nur die Dosierung selbst, sondern auch bspw. die nachfolgende Reinigung der Dosiereinrichtung.

DE 22 57 824 A1 offenbart eine Dosiereinrichtung zur Dosierung von rieselfähigem Material zur Aufbereitung von rieselfähigem Probenmaterial, aufweisend ein Dosiergefäß und eine ihm zum Vibrationsantrieb zugeordnete Vibrationsantriebseinrichtung, wobei die Dosiereinrichtung einen Dosierlöffel aufweist, der das Dosiergefäß und einen davon ausgehenden Dosierlöffelstiel unfasst.

DE 24 24 063 A1 offenbar eine Dosiereinrichtung zur Dosierung von rieselfähigem Material, aufweisend ein Dosiergefäss und eine ihm zum Vibrationsantrieb zugeordnete Vibrationsantriebseinrichtung.

DE 19 24 653 B offenbart eine Vibrationsantriebseinrichtung, die dazu geeignet ist, Massengüter zu verdichten, und die insbesondere an Behältern angewendet wird. Diese Vibrationsantriebseinrichtung weist eine Strömungskammer und ein darin beweglich aufgenommenes Massenelement auf, wobei die Strömungskammer einen Fluideinlass für zuströmendes Fluid und einen Fluidauslass zum Entweichen des Fluids aufweist.

Vor diesem Hintergrund liegt der Erfindung die Aufgabe zugrunde, eine Dosiereinrichtung der eingangs genannten Art vorteilhaft weiterzubilden, so dass insbesondere die vorgenannten Nachteile möglichst weitgehend vermieden werden.

Die Aufgabe wird gemäß dem Gegenstand der Ansprüche gelöst. Somit können Vibrationen bzw. Schwingungen ohne Umweg über äußere Gehäuseteile (wie den Trichter) auf das Dosiergefäß übertragen werden. Im Vergleich zu herkömmlichen Dosiereinrichtungen lässt sich nach der erfindungsgemäßen Lösung die zur Vermeidung von Hohlräumen im Dosiergefäß gewünschte Verdichtung des Probenmaterials mit einem geringeren Energieverbrauch erreichen. Als weite-rer Vorteil ergibt sich eine gegenüber der bekannten Lösung verringerte Geräuschentwicklung. Hinzu kommt, dass durch die pneumatische Vibrationsantriebseinrichtung keine elektrische Aufladung bzw. Magnetisierung des Dosierguts hervorgerufen wird. In Versuchen wurde darüber hinaus auch eine gegenüber elektromechanischen Schwingungsantrieben gleichmäßigere Verdichtung festgestellt, die in Verbindung damit gesehen wird, dass sich mit der erfindungsgemäßen pneumatischen Vibrationsantriebseinrichtung (anders als mit herkömmlichen elektromechanischen Antrieben) auch zeit- und richtungsmäßig unregelmäßige Schwingungen bzw. Vibrationen erzeugen lassen. Dazu kann das Vibrationsverhalten insbesondere bezüglich der zeitlichen Abfolge und der Stärke der einzelnen Vibrationsstöße mittels einer Reihe von Parametern beeinflusst werden. Im Rahmen der Erfindung kann bereits ausreichen, wenn in der Strömungskammer nur ein einzelnes Massenelement enthalten ist, vorzugsweise handelt es sich aber um eine Gruppe von bspw. zwei bis zehn Massenelementen, weiter vorzugsweise um etwa vier bis fünf Massenelemente, alternativ könnte aber auch eine deutlich größere Anzahl vorhanden sein. Vorzugsweise ist die Strömungskammer mittels des Fluideinlasses an eine Druckluftquelle, bspw. an einen Druckluftspeicher oder an eine Druckluftzuleitung, angeschlossen. Es besteht so die Möglichkeit, dadurch Druckluft, welche gegenüber Umgebungs- bzw. Atmosphärendruck zunächst einen Überdruck von beispielsweise einem oder mehreren Bar aufweisen kann, in die Strömungskammer einzuleiten, um darin die die Massenelemente bewegende Strömung zu verursachen. Die gewählte Druckhöhe beeinflusst das Strömungsverhalten, wobei diese vorzugsweise derart auf die Massenelemente und die Strömungskammer abgestimmt ist, dass darin unregelmäßige Verwirbelungen bzw. turbulente Strömungen entstehen, welche das oder die Massenelemente in vorzugsweise zeitlich und richtungsmäßig unregelmäßiger bzw. chaotischer Folge gegen die Kammerwände anstoßen lässt. Durch den Fluidauslass der Strömungskammer kann Fluid aus der Strömungskammer abgeleitet werden, so dass es darin zu keinem fortdauernden Druckanstieg kommt. Die gewünschten, vorzugsweise zeit- und / oder richtungsmäßig unregelmäßigen, Verwirbelungen

des oder der Massenelemente in der Kammer und die durch ihr Aufstoßen auf die Kammerwände bewirkten Vibrationen werden vorzugsweise durch eine zeitlich kontinuierliche Zufuhr von Druckluft ausgelöst, so dass die Vibrationen insofern einem statistischen Mittel unterliegen. Alternativ ist auch denkbar, das Fluid bzw. die Druckluft mit von der Zeit abhängigem Druck bzw. Geschwindigkeit bzw. gepulst zuzuführen. Das Strömungsverhalten kann auch dadurch beeinflusst werden, dass eine Mehrzahl von Fluideinlässen und / oder eine Mehrzahl von Fluidauslässen vorhanden ist. Eine zweckmäßige Ausgestaltung wird darin gesehen, dass der Fluideinlass eine sprunghafte Querschnittserweiterung für das Fluid ausbildet. Die der Strömungskammer unter einem Überdruck zuströmende Druckluft wird dort beim Eintritt in die Kammer sprunghaft entspannt, wodurch die Ausbildung von Verwirbelungen und Turbulenzen begünstigt werden kann.

Erfindungsgemäß ist eine erste Ausgestaltung bevorzugt, bei welcher die Dosiereinrichtung einen Dosierlöffel aufweist, der das Dosiergefäß und einen davon ausgehenden Dosierlöffelstiel umfasst und wobei die Strömungskammer innerhalb des Dosierlöffelstieles, vorzugsweise benachbart und weiter vorzugsweise angrenzend an eine Wand des Dosiergefäßes, angeordnet ist. Unter einem Dosierlöffel wird dabei allgemein eine löffelartig gestaltete Kombination aus einem Dosiergefäß, welches vielfältige Gestaltungen aufweisen kann, und eines davon ausgehenden mehr oder minder langgestreckten und insbesondere seitlich von dem Dosiergefäß ausgehenden Halteteil (Stiel) verstanden. Indem die Strömungskammer innerhalb des Dosierlöffelstieles und vorzugsweise angrenzend an eine Wand des Dosiergefäßes untergebracht ist, wird zusätzlich zu einer platzsparenden Anordnung auch ein besonders kurzer Übertragungsweg der Schwingungen bzw. Vibrationen vom Ort der Entstehung (d.h. von der Strömungskammer) bis zur Dosiergefäßwandung erreicht, von wo die Schwingungen bzw. Vibrationen vom Rand her in das Proben material übertragen werden. Es wird so eine weitgehend verlustfreie Übertragung erreicht. Die Strömungskammer kann eine Kammerlängsachse aufweisen, die sich in Längsrichtung des Dosierlöffelstieles erstreckt, wobei der Kammerhohlraum zu der Kammerlängsachse vorzugsweise rotationssymmetrisch und weiter vorzugsweise zylindrisch berandet ist. Alternativ oder kombinativ kann das Dosiergefäß eine Gefäßlängsachse aufweisen, die sich quer zu der besagten Kammerlängsachse erstreckt, wobei zumindest ein Gefäßhohlraum zu der Gefäßlängsachse vorzugsweise rotationssymmetrisch und weiter vorzugsweise sich zu der offenen Seite hin konisch erweiternd berandet sein kann. Eine derartige Orientierung der Gefäßlängsachse bzgl. der Kammerlängsachse hat sich im Hinblick auf die Einleitungsrichtung der Vibrationen als vorteilhaft für eine gleichmäßige Verdichtung des rieselfähigen Probenmaterials im Dosiergefäß herausgestellt. Bei einer möglichen näheren Ausgestaltung wird die Strömungskammer in Richtung der Kammerlängsachse von zwei Stirnwänden berandet, welche vorzugsweise zumindest bereichsweise zueinander parallel und senkrecht zu der Kammerlängsachse verlaufen. Dies unterstützt die Übertragung von Stößen bzw. Vibrationen auf das Dosiergefäß in zu dessen Längsachse quer, insbesondere senkrecht, verlaufenden Richtungen. Alternativ können die Kammerwände, insbesondere die Stirnwände der Kammer, allgemein gewölbt bzw. kurvenförmig gestaltet sein und bspw. kugelsegmentförmig, kegelig, konisch oder dergleichen ausgeformt sein. Bevorzugt ist, dass der Fluideinlass und / oder der Fluidauslass an einer dem Dosiergefäß abgewandten Wand, insbesondere Stirnwand, der Strömungskammer vorzugsweise mittig zum Kammerquerschnitt angeordnet ist / sind. Insofern ist bei einem runden Kammerquerschnitt eine mittenzentrierte Anordnung bevorzugt. Auch kann bspw. der Fluideinlass mittig und der Fluidauslass am äußeren Rand einer Stirnwand angeordnet sein.

Alternativ ist auch eine zweite Ausgestaltung bevorzugt, bei welcher das Dosiergefäß zumindest einen, zu einer Gefäßlängsachse insbesondere rotationssymmetrisch berandeten, Gefäßhohlraum aufweist und die Längserstreckung der Strömungskammer entlang der Dosiergefäßumfangsrichtung verläuft. Dies bedeutet, dass die Längserstreckungsrichtung der Strömungskammer bei dieser Variante im allgemeinen bogenförmig verläuft, also bspw. entlang einer Kreisbahn, wobei aber auch davon abweichende Verlaufsformen und insbesondere in Verbindung mit einem eckigen bzw. mehrkantigen Dosiergefäßumfang auch hieran angepasste Längserstreckungen der Strömungskammer möglich wären. Bevorzugt ist, dass sich die Strömungskammer ringartig durchgehend entlang des gesamten Dosiergefäßumfanges längserstreckt. Auf einer solchen Kreisbahn können sich die zur Erzeugung der Vibrationen dienenden Massenelemente bei entsprechender Zu- und Abfuhr des Strömungsfluids in wiederholten Umläufen bewegen. Bevorzugt ist, dass der quer zur Längserstreckungsrichtung der Strömungskammer orientierte Kammerhohlraumquerschnitt größer als der Massenelementquerschnitt bemessen ist, so dass die Massenelemente auch bzgl. Querrichtungen der Strömungskammer beweglich bzw. verschieblich sind. Durch diese zusätzlichen Freiheitsgrade wird ermöglicht, dass sich die Massenelemente nicht regelmäßig auf einer genau vorbestimmten Bewegungsbahn bewegen, sondern eine unregelmäßige Bewegung zustande kommt, bei der die Massenelemente mit der Begrenzungswand der Strömungskammer kollidieren und entsprechend vielfältige Vibrationen entstehen. Gleichwohl wäre alternativ auch denkbar, dass sich die Strömungskammer nur entlang eines oder mehrerer Teilbereiche des Dosiergefäßumfanges längserstreckt. Bevorzugt ist weiterhin, dass der Radialabstand der Strömungskammer von der Gefäßlängsachse zumindest in etwa dem Radialabstand der Dosiergefäßseitenwand von der Gefäßlängsachse entspricht. Es besteht die Möglichkeit, dass die Strömungskammer von einem Boden des Dosiergefäßes, vorzugsweise von einem zwischen zwei Gefäßhohlräumen zweier Dosierbecher des Dosiergefäßes liegenden Zwischenboden, berandet ist. Zur Erzeugung der Strömungskammer kann beispielsweise in die vorzugsweise rotationssymmetrische Außenwand des Dosiergefäßes eine Ringnut eingebracht und diese mit einer über die Außenwand geschobenen Hülse im Querschnitt verschlossen werden. Alternativ oder kombinativ kann die Ringnut auch in der Innenwand besagter Hülse liegen. Eine zweckmäßige Weiterbildung wird darin gesehen, dass der Fluideinlass einen in die ringförmige Strömungskammer mündenden Einlassabschnitt aufweist, dessen Längsrichtung zumindest eine zu der Umfangsrichtung der Strömungskammer tangentiale Komponente aufweist oder tangential zu der Umfangsrichtung verläuft. Das der Strömungskammer zugeführte, unter Druck stehende Fluid tritt dadurch unter einer Vorzugsrichtung bzw. mit einem bevorzugten Umlaufsinn in die Strömungskammer ein, so dass die Mitführung von Massenelementen begünstigt wird. Alternativ oder kombinativ ist bevorzugt, dass der Fluidauslass einen von der ringförmigen Strömungskammer ausgehenden Auslassabschnitt aufweist, dessen Längsrichtung eine zu der Umfangsrichtung der Strömungskammer senkrechte Komponente aufweist oder senkrecht zu ihr verläuft.

Der Fluideinlass kann mit einer Fluidzuleitung und der Fluidauslass mit einer Fluidableitung verbunden sein, wobei sich die Fluidzuleitung und / oder die Fluidableitung vorzugsweise durch zumindest einen Längenabschnitt des Dosierlöffelstieles in dessen Längsrichtung erstrecken können. Bei einer dazu bevorzugten Ausführung weist die Fluidzuleitung ein zentrales Rohrelement auf, und die Fluidableitung wird von einem das Rohrelement konzentrisch umgebenden Ringspalt gebildet. Als zweckmäßig wird angesehen, wenn der Dosierlöffelstiel um eine insbesondere horizontale Drehachse drehbar gehalten ist, wobei der Begriff Drehachse hier im Sinne einer geometrischen Bezugslinie verwendet wird. Es besteht so die Möglichkeit, das Dosiergefäß, dessen offene Seite beim Befüllen und Verdichten des Probenmaterials nach oben weist, anschließend mittels einer Drehung, vorzugsweise um eine halbe Umdrehung, zu entleeren, wobei das dosierte Probenmaterial nach unten fällt und in geeigneter Weise aufgefangen werden kann. Zum Zweck der Drehung kann ein vorzugsweise pneumatischer, an dem Dosierlöffelstiel angreifender Drehantrieb vorhanden sein, wobei sich die Fluidzuleitung und / oder die Fluidableitung durch den Drehantrieb hindurch erstrecken kann / können. Sowohl der Vibrationsantrieb als auch der Drehantrieb kann vorzugsweise pneumatisch erfolgen, so dass im Bereich der Dosiereinrichtung ggf. sogar gänzlich auf elektrische (oder sonstige) Antriebsenergie verzichtet werden kann.

Das Strömungs- und dadurch Vibrationsverhalten kann auch durch die Auswahl bzw. Gestaltung der Massenelemente beeinflusst werden. Bevorzugt sind diese als Kugeln ausgebildet. Alternativ sind auch bspw. elliptische, zylindrische, polyedrische usw. Formen möglich. Sind mehrere Massenelemente vorhanden, können diese vorzugsweise die gleiche (alternativ auch verschiedene) Größe aufweisen. Vorzugsweise sind Metallkugeln, weiter vorzugsweise Stahlkugeln, vorgesehen. Die Vielfalt der Flugbewegungen und Stoßformen der Massenelemente und dadurch die Vielfalt an Vibrationsformen lässt sich dadurch vergrößern, dass mehrere Massenelemente eingesetzt werden, die sich insbesondere hinsichtlich ihrer Form und / oder Größe und / oder ihres Gewichtes und / oder ihrer Dichte voneinander unterscheiden. Bevorzugt ist, dass die Längserstreckung der Strömungskammer bzw. ihres Kammerhohlraumes in Kammerlängsrichtung bzw. in Dosiergefäßumfangsrichtung ein Mehrfaches, vorzugsweise das Zwei- bis Dreifache, der Abmessungen, vorzugsweise des Kammerhohlraumdurchmessers, der Abmessungen des Kammerhohlraumquerschnitts quer zur Kammerlängsachse bzw. Längserstreckungsrichtung beträgt. Alternativ oder kombinativ ist bevorzugt, dass die Abmessungen des Kammerhohlraumquerschnittes, vorzugsweise der Kammerhohlraumdurchmesser, ein Mehrfaches, vorzugsweise das Zwei- bis Fünffache, der Abmessungen eines Massenelementes, vorzugsweise des Durchmessers eines Massenelementes, beträgt. In Verbindung damit wird eine Anzahl von Massenelementen als günstig angesehen, mit der das Kammervolumen nur zu einem vergleichsweise geringen Volumenanteil von den Massenelementen ausgefüllt wird. Vorzugsweise kann ihr Anteil am Kammervolumen weniger als die Hälfte, weiter vorzugsweise weniger als ein Viertel betragen.

Das Strömungs- und dadurch Vibrationsverhalten kann auch durch die Auswahl bzw. Gestaltung der Massenelemente beeinflusst werden. Bevorzugt sind diese als Kugeln ausgebildet. Alternativ sind auch bspw. elliptische, zylindrische, polyedrische usw. Formen möglich. Sind mehrere Massenelemente vorhanden, können diese vorzugsweise die gleiche (alternativ auch verschiedene) Größe aufweisen. Vorzugsweise sind Metallkugeln, weiter vorzugsweise Stahlkugeln, vorgesehen. Die Vielfalt der Flugbewegungen und Stoßformen der Massenelemente und dadurch die Vielfalt an Vibrationsformen lässt sich dadurch vergrößern, dass mehrere Massenelemente eingesetzt werden, die sich insbesondere hinsichtlich ihrer Form und / oder Größe und / oder ihres Gewichtes und / oder ihrer Dichte voneinander unterscheiden. In Verbindung mit den verschiedenen zuvor beschriebenen Ausgestaltungen ist bevorzugt, dass das oder die Massenelemente hinsichtlich ihrer Größe so gewählt sind, dass das oder die Massenelemente innerhalb der Strömungskammer in mehreren, zueinander quer orientierten Bewegungsebenen beweglich, vorzugsweise translatorisch beweglich, sind. Es wird dadurch eine unregelmäßige Bewegungsbahn der Massenelemente, dadurch eine größere Variation an Vibrationen und dadurch schließlich eine gleichmäßigere Verdichtung des Dosierguts ermöglicht.

Die Erfindung betrifft außerdem auch eine Probenaufbereitungsvorrichtung bzw. eine Probenbearbeitungseinrichtung zur Aufbereitung bzw. zur Bearbeitung von rieselfähigem Probenmaterial, welche zumindest eine Dosiereinrichtung umfasst, die einzelne oder mehrere der zuvor beschriebenen Merkmale aufweist. Auch besteht die Möglichkeit, dass auch bestimmte Untersuchungen an dem rieselfähigen Material innerhalb der gleichen Vorrichtung durchgeführt werden, so dass insofern von einer Probenaufbereitungs- und - untersuchungsvorrichtung zu sprechen ist.

Die Erfindung wird nachfolgend weiter mit Bezug auf die beigefügten Figuren beschrieben, in welchen ein bevorzugte Ausführungsbeispiele dargestellt sind. Darin zeigt:
- Fig. 1: in einem Schnitt eine erfindungsgemäße Dosiereinrichtung in einer zentralen Dosierposition und einen Abstreifer einer Probenaufberei- tungsvorrichtung gemäß einer ersten bevorzugten Ausführungs- form,
- Fig. 1a: eine Vergrößerung von Ausschnitt Ia in Fig. 1,
- Fig. 2: die in Fig. 1 gezeigte Anordnung perspektivisch aus einer ersten Be- trachtungsrichtung,
- Fig. 3: die in Fig. 1 gezeigte Anordnung perspektivisch, jedoch aus einer bezüglich Fig. 2 hinteren Betrachtungsrichtung,
- Fig. 4: eine Draufsicht in Blickrichtung IV gemäß Fig. 1,
- Fig. 5: eine Schnittansicht entlang Schnittebene V - V gemäß Fig. 4,
- Fig. 6: die in den Figuren 1 bis 5 gezeigte Anordnung in einer teilweisen Ex- plosionsansicht,
- Fig. 7: eine weitere teilweise Explosionsansicht bei in Bezug auf Fig. 6 um- gekehrter Betrachtungsrichtung,
- Fig. 8: in einer Fig. 1 vergleichbaren Schnittführung durch die Dosierein- richtung einen Schritt bei einer bevorzugten Verwendung, wobei das Dosiergefäß zur Aufnahme von Dosiergut aus der Dosierposition verfahren wurde,
- Fig. 9: einen folgenden Schritt bei der bevorzugten Verwendung,
- Fig. 10: einen nachfolgenden Schritt bei der bevorzugten Verwendung,
- Fig. 11: einen noch weiter nachfolgenden Schritt bei der bevorzugten Ver- wendung,
- Fig. 12: in einer zu Figur 1 analogen Schnittführung eine erfindungsgemäße Dosiereinrichtung einer Probenufbereitungsvorrichtung gemäß ei- ner zweiten bevorzugten Ausführungsform,
- Fig. 12a: einen Schnitt entlang Schnittlinie XIIa - XIIa in Fig. 12,
- Fig. 12b: einen Schnitt entlang Schnittlinie XIIb - XIIb in Fig. 12 und
- Fig. 13: eine weitere bevorzugte, bzgl. der Strömungskammer gegenüber Fig. 12 modifizierte Ausführungsform der erfindungsgemäßen Do- siereinrichtung.

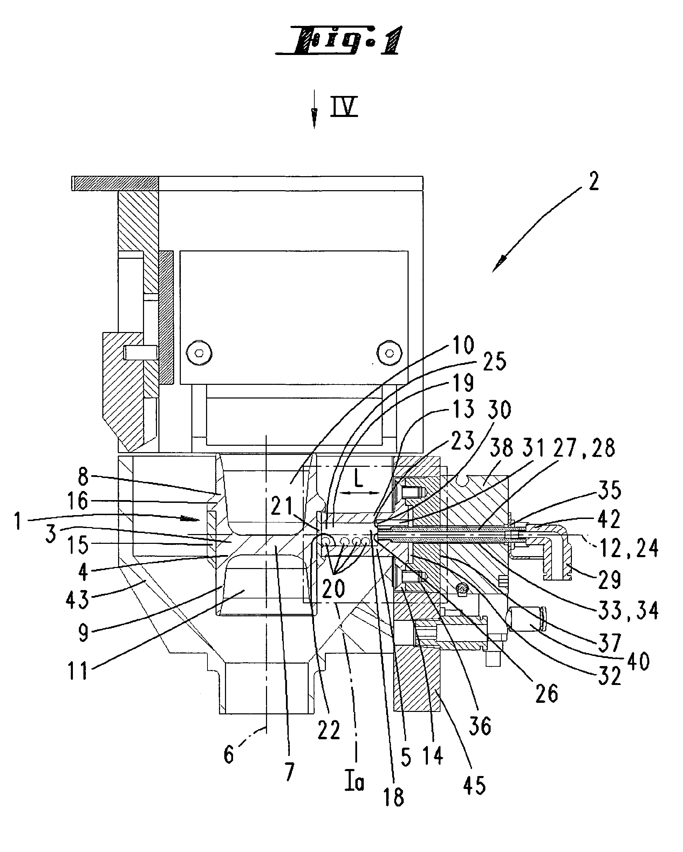

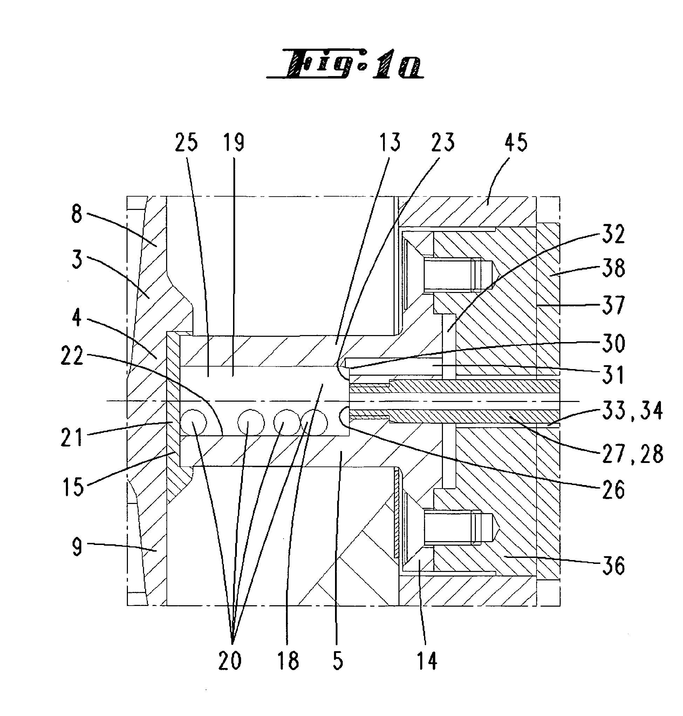

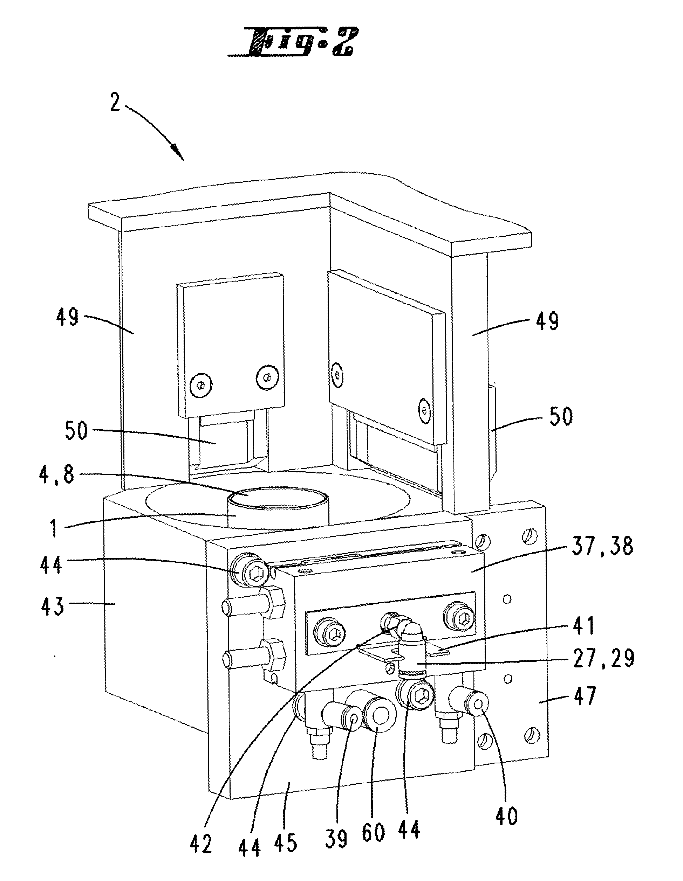

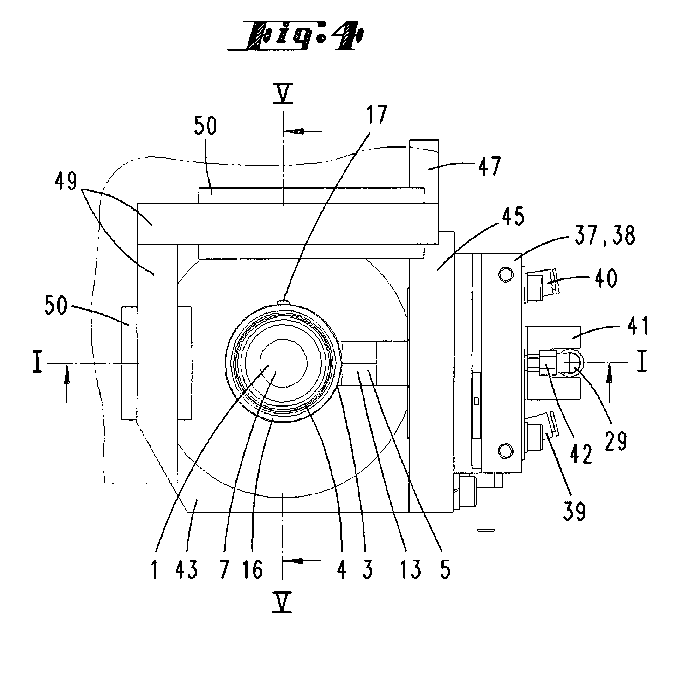

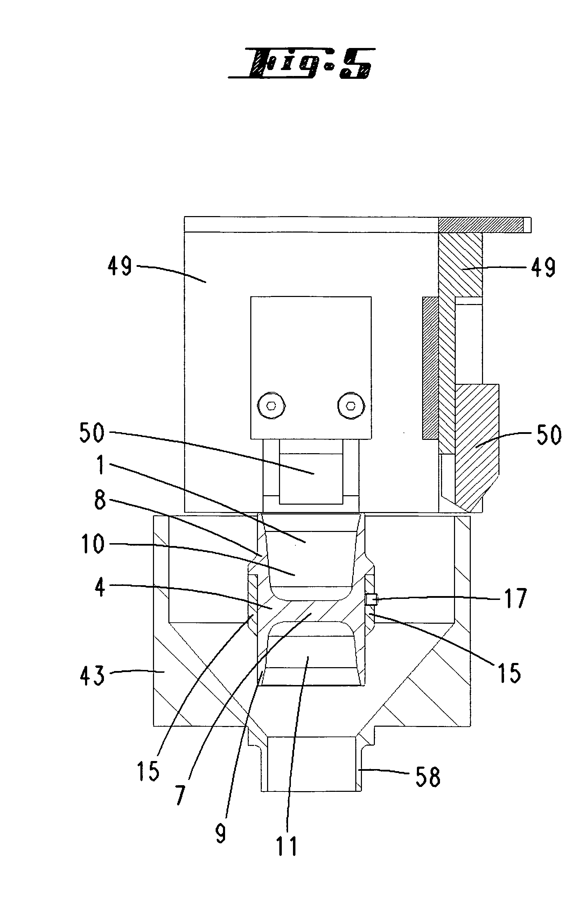

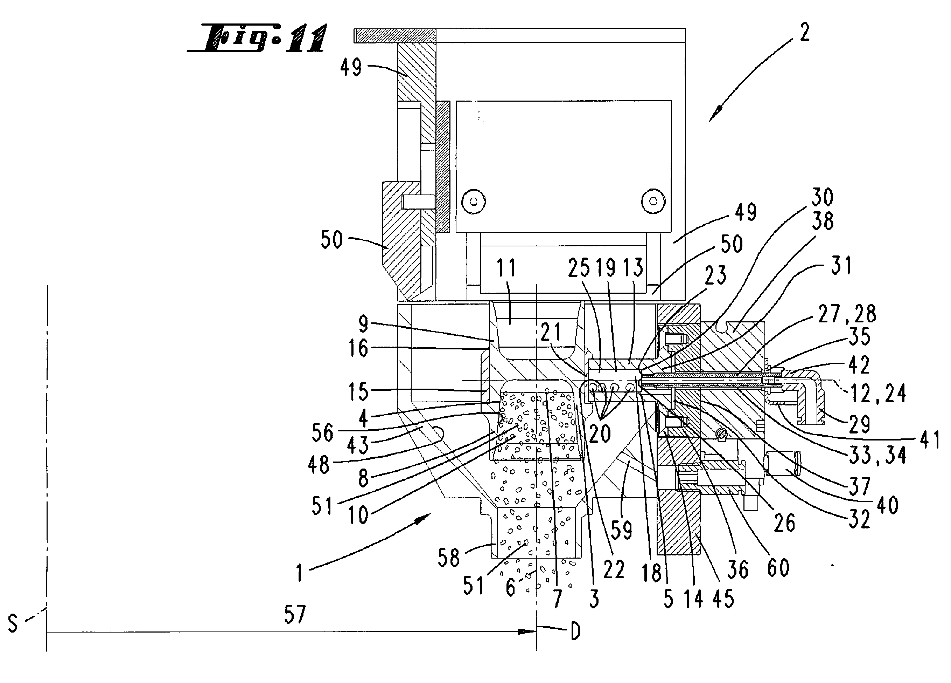

In den Figuren 1 bis 11 ist die erfindungsgemäße Dosiereinrichtung 1 gemäß einer ersten bevorzugten Ausführungsform in Verbindung mit benachbarten Teilen einer insofern ebenfalls bevorzugten erfindungsgemäßen Probenaufbereitungsvorrichtung 2 dargestellt. Die Dosiereinrichtung 1 umfasst einen Dosierlöffel 3, der in dem gezeigten Beispiel ein Dosiergefäß 4 und einen daran seitlich angeschlossenen Dosierlöffelstiel 5 umfasst, Bei dem Dosiergefäß 4 handelt es sich um ein bzgl. der Innenkontur zu einer senkrechten Gefäßlängsachse 6 konzentrisches Hülsenteil. Dieses besitzt etwas versetzt zu der in Richtung der Gefäßlängsachse 6 gemessenen Mitte einen Zwischenboden 7, der zwei insofern gebildete, zu den Stirnflächen hin offene Dosierbecher 8, 9 abteilt. In der in Fig. 1 gezeigten Gebrauchsstellung berandet der gerade obere Dosierbecher 8 einen Gefäßhohlraum 10, der zufolge des außermittigen Bodens 7 zur Dosierung von etwas größeren Mengen eines rieselfähigen Probenmaterials etwas tiefer als der Gefäßhohlraum 11 des gerade unteren Dosierbechers 9 beschaffen ist. Der Dosierlöffelstiel 5 erstreckt sich rotationssymmetrisch zu einer horizontalen Drehachse 12, welche die Gefäßlängsachse 6 rechtwinklig schneidet. Er umfasst einen langgestreckten, im Außenquerschnitt mehrkantigen Längenabschnitt 13, der an seinem einen Längsende mit dem Dosiergefäß 4 verbunden ist und der an dem gegenüberliegenden Längsende einstückig in einen radial vergrößerten Flansch
14 übergeht. Zur Verbindung mit dem Dosiergefäß ist der Längenabschnitt 13 auf nicht näher dargestellte Weise, vorzugsweise lösbar, mit einer Hülse 15 verbunden (bspw. verschraubt). Das Dosiergefäß, 4 ist im Bereich seines zylindrischen Außenmantels passgenau in die Hülse 15 eingesteckt, so dass ein radial hervorspringender Kragen 16 als Anschlag gegen eine Stirnseite der Hülse tritt. Um zu verhindern, dass das Dosiergefäß bei der bspw. in Fig. 11 gezeigten Gebrauchsstellung aus der Hülse rutschen kann, ist, wie in Fig. 5 gezeigt, die Hülse 15 mittels einer durch sie hindurchführenden Klemmschraube 17 an dem Dosiergefäß 4 gehalten. Andererseits ermöglicht besagte Klemmschraube nach dem Lösen auch die Entnahme des Dosiergefäßes, 4, um dieses bspw. zu reinigen oder auszutauschen. Um das Dosiergefäß 4 zwecks Verdichtung von darin eingefülltem (in den Figuren 1 bis 7 zeichnerisch nicht mit dargestelltem) Probenmaterial zu Vibrationen anzuregen, ist die erfindungsgemäße Dosiereinrichtung 1 mit einer pneumatischen Vibrationsantriebseinrichtung 18 ausgestattet. Diese umfasst eine in den Längenabschnitt 13 des Dosierlöffelstiels 5 integrierte Strömungskammer 19 mit darin in dem gewählten Beispiel vier beweglich aufgenommenen kugelförmigen Massenelementen 20. Bei der Strömungskammer 19 handelt es sich um eine von dem einen Längsende ausgehend in den Längenabschnitt 13 eingebrachte Zylinderbohrung. Die an dieser Stirnseite liegende Querschnittsöffnung wird in dem gezeigten Gebrauchszustand durch die fest anschließende Hülse 15, welche dazu in dem Anschlussbereich eine Abflachung aufweist, dicht verschlossen. Der in Fig. 1 erkennbare durch eine Eintiefung abgeflachte Bereich der Hülse 15 bildet eine ebene Stirnwand 21 der Strömungskammer. Dazu parallel erstreckt sich an dem gegenüberliegenden Längsende der Zylinderwand 22 eine ebenfalls ebene Stirnwand 23. Die mittensymmetrische Kammerlängsachse 24 der Strömungskammer fällt mit der Drehachse 12 und richtungsmäßig mit der Längsrichtung L des Dosierlöffelstiels 5 zusammen. Die Stirnwand 23 an dem von dem Dosiergefäß 4 abgewandten Längsende des Kammerhohlraums 25 weist mittig einen Fluideinlass 26 auf. Dieser wird gebildet durch die stirnseitige Mündung eines als Fluidzuleitung 27 dienenden Rohrelementes 28, das mit einem an die besagte Mündung angrenzenden Gewindeabschnitt in eine passende, an den Kammerhohlraum anschließende Gewindebohrung eingeschraubt ist. Die Fluidzuleitung 27 umfasst des Weiteren ein Winkelanschlussstück 29, das zum Anschluss an bspw. eine (nicht mit dargestellte) Druckluftzuleitung geeignet ist. Durch die Fluidzuleitung 27 kann somit ein Fluid, vorzugsweise Druckluft, in den Kammerhohlraum 25 eingeleitet werden, um darin eine Strömung bzw. Verwirbelungen zur Bewegung der kugelförmigen Massenelemente 20 zu verursachen. Um in entsprechendem Umfang Fluid bzw. Luft aus der Strömungskammer wieder abzuführen, ist am radial äußeren Übergang von der Stirnwand 23 zu der Zylinderwandfläche 22 ein Fluidauslass 30 vorgesehen. Die entsprechende Öffnung geht in eine in Längsrichtung L verlaufende Bohrung 31 und diese in eine scheibenartige Umfangsöffnung 32 über, die mit einem das Rohrelement 28 umgebenden Ringspalt 33 eine Fluidableitung 34 bildet. An dem anderen, mit 35 bezeichneten Längsende mündet die Fluidableitung 34 in die äußere Umgebung bzw. Atmosphäre. Am Fluideinlass 26 schließt die Stirnwand des Rohrelements 28 bündig mit der Stirnwand 23 ab. Insofern erweitert sich am Fluideinlass der Querschnitt des Rohrinneren sprunghaft auf den um ein Mehrfaches größeren Durchmesser des Kammerhohlraums 25, wodurch die Entstehung von Wirbelströmungen begünstigt wird. Der runde Querschnitt des Kammerhohlraums 25 weist einen Durchmesser auf, der dem etwa Dreifachen des Kugeldurchmessers der Massenelemente 20 entspricht. Die Länge des Kammerhohlraums 25 in Längsrichtung L beträgt geringfügig mehr als das Doppelte ihres besagten Durchmessers.

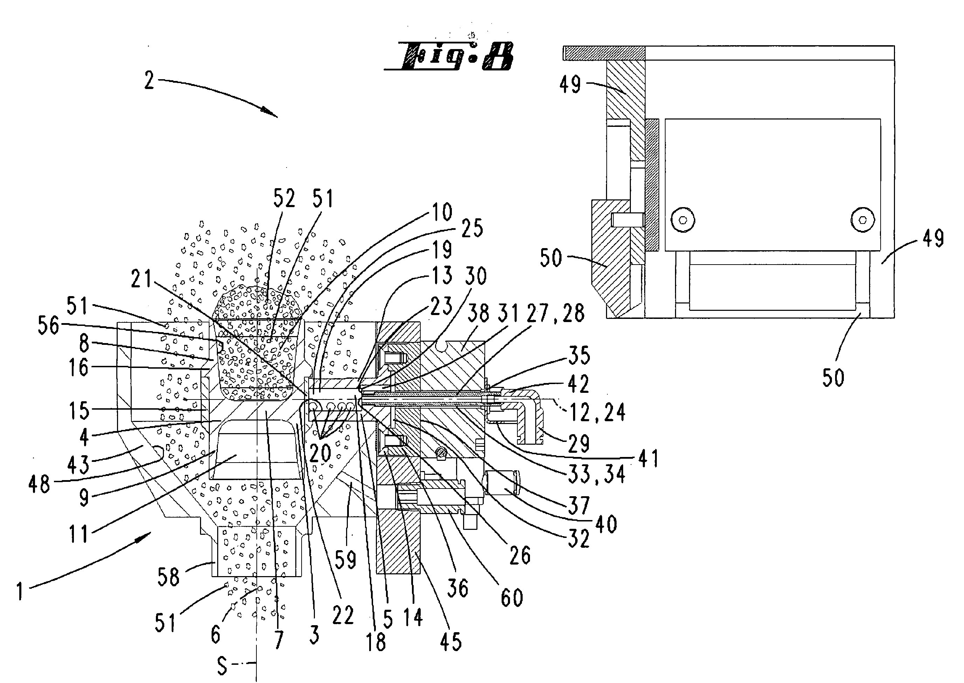

Der Dosierlöffel 3 ist, wie noch in den Figuren 8 bis 11 näher dargestellt, um die horizontale Drehachse 12 drehbar gehalten. Dazu ist der Dosierlöffelstiel an seinem Flansch 14 an einem Rotor 36 bzw. drehangetriebenen Ende eines pneumatischen Drehantriebs 37 angeschraubt. Der nur schematisch angedeutete Drehantrieb 37 umfasst auch einen nicht mitgedrehten, insofern als Stator 38 bezeichneten Antriebsteil. Wird dem Drehantrieb 37 bspw. ventilbetätigt durch einen Einlass 39 oder 40 Druckluft zugeführt, führt der Rotor 36 relativ zu dem Stator 38 eine Drehbewegung um die Drehachse 12 in die eine oder andere Richtung aus, wodurch auch der Dosierlöffel 3 entsprechend verdreht wird. Ersichtlich erstrecken sich die Fluidzuleitung 27 und die Fluidableitung 34 zentral durch den Drehantrieb 37 hindurch. Das Winkelanschlussstück 29 wird von einem gabelförmigen, an dem Stator 38 befestigten Halteblech 41 an einer Drehung gehindert und schließt mittels eines Drehanschlusses im Bereich einer Hülse 42 bzw. an das Rohrelement 28 an. Die Hülse 42 ist axial an dem Winkelanschlussstück 29 festgelegt, kann aber um die Drehachse 12 verdreht werden.

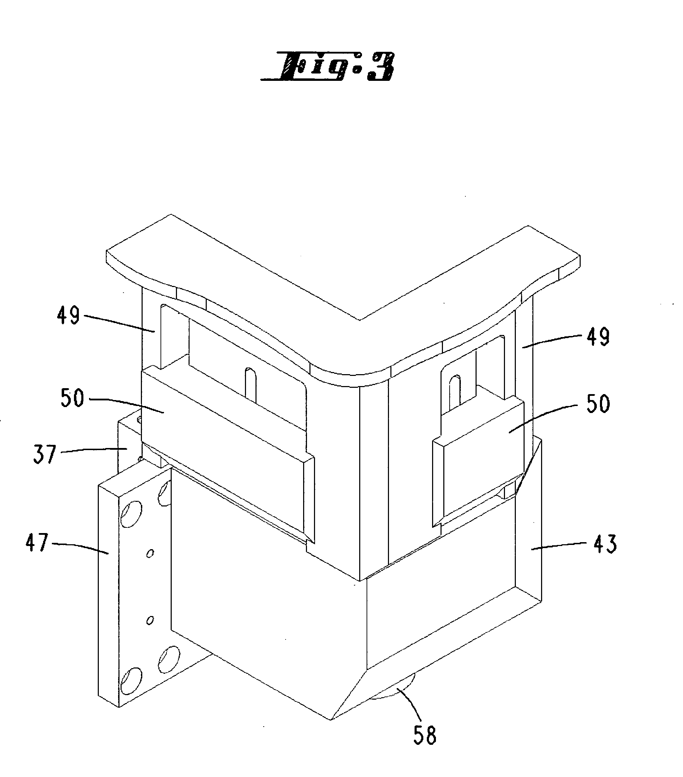

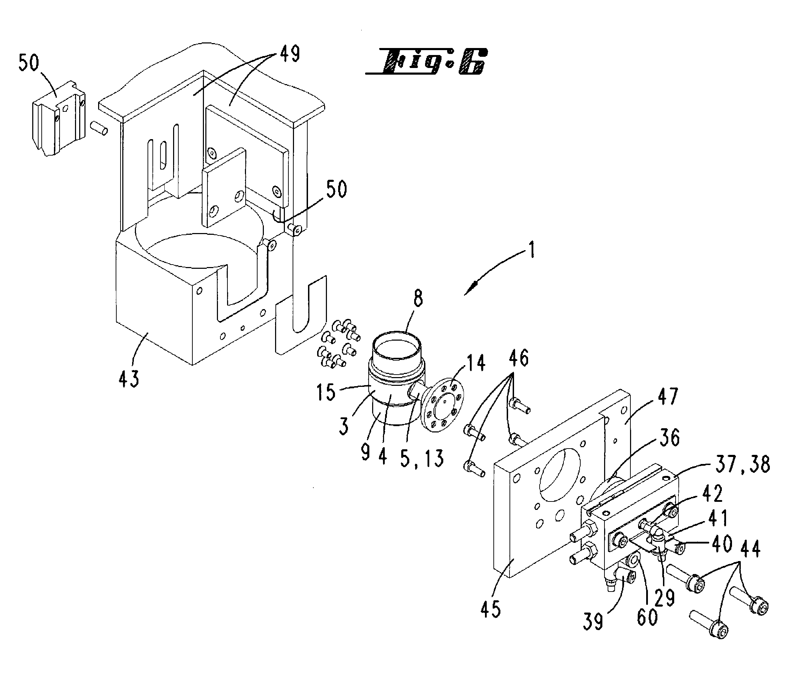

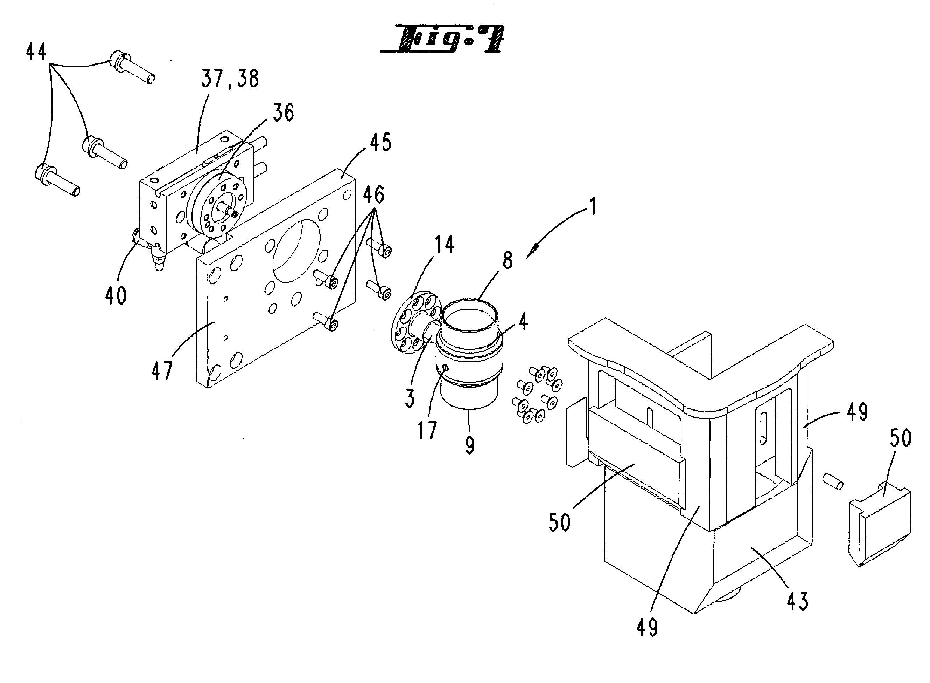

Bei dem in den Figuren dargestellten Ausführungsbeispiel befindet sich das Dosiergefäß 4 mit für die beschriebene Drehbewegung ausreichendem seitlichem Abstand im Inneren eines Trichters 43. Die Figuren 6 und 7 deuten an, dass der Trichter 43 mittels Schrauben 44 an einer Tragplatte 45 befestigt ist, an der mittels weiteren Schrauben 46 auch der Stator 38 des Drehantriebs 37 gehalten ist. Die Tragplatte 45 kann bspw. an dem in Fig. 6 mit 47 bezeichneten Plattenabschnitt an einem Haltestück (bspw. Träger) einer in den Figuren nicht mit dargestellten Verfahreinrichtung bspw. einer Probenaufbereitungsvorrichtung 2 befestigt werden. An zwei oberhalb des Trichters 43 senkrecht und zueinander rechtwinklig angeordneten Führungswänden 49 ist jeweils ein zum Entfernen eines Schüttkegels vorgesehener Abstreifer 50 vertikal verschieblich gehalten (vgl. auch Fig. 3). Während in dem Ausführungsbeispiel der Trichter 43 mit der Dosiereinrichtung mittels der (in den Figuren nicht mit dargestellten) Verfahreinrichtung seitlich in einer zur Gefäßlängsachse 6 senkrechten Ebene verfahrbar ist, sind die Wände 49 mit den Abstreifern auf nicht näher dargestellte Weise seitlich ortsfest gehalten.

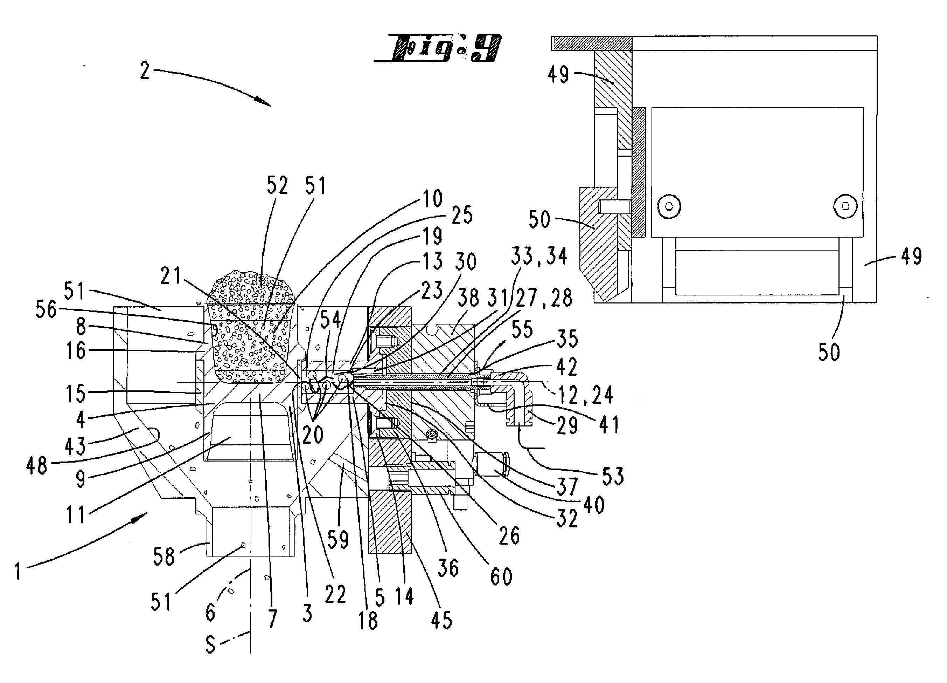

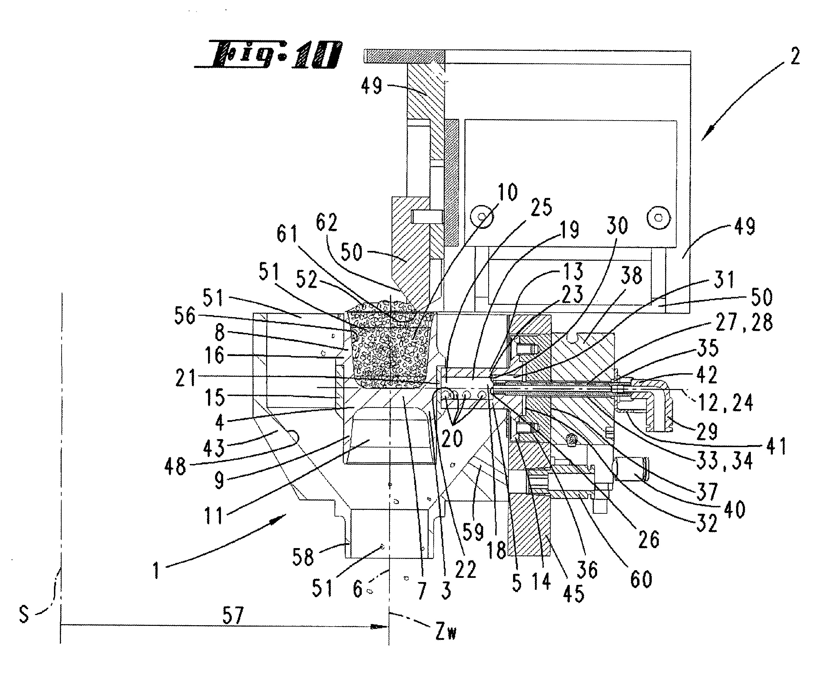

Mit Bezug auf die Figuren 8 bis 11 wird nachfolgend eine bevorzugte Verwendung bzw. ein im Rahmen der Erfindung bevorzugtes Dosierverfahren unter Verwendung der zuvor erläuterten Ausführungsform der erfindungsgemäßen Dosiereinrichtung 1 beschrieben. Fig. 8 zeigt dazu in einem Längsschnitt zunächst einen Verwendungsschritt, in welchem der Trichter 43 mit dem Dosiergefäß 4 aus der in den Figuren 1 bis 7 gezeigten Dosierposition zunächst in eine Startposition S verfahren worden ist. In dieser Position wird rieselförmiges Probenmaterial 51 (in dem gezeigten Beispiel ein Granulat) von oben aus einer nicht mit dargestellten Zufuhreinrichtung in den Trichter 43 eingeschüttet. Im Zuge dieses Einschüttens wird das Dosiergefäß 4 bzw. dessen nach oben hin offener Gefäßhohlraum 10 mit dem Probenmaterial 51 aufgefüllt, wobei sich bei zunächst loser Einfüll- bzw. Packungsdichte auf der Oberfläche ein erhabener Schüttkegel 52 bildet. Die Führungswände 49 für die Abstreifer 50 sind an der in Fig. 8 gezeigten Position auf zeichnerisch nicht näher dargestellte Weise gehalten. In Fig. 9 wurde die Zufuhr von Probenmaterial abgestellt. Zur Verdichtung des Probenmaterials 51 in dem oberen Dosierbecher 8 wird, wie durch den Pfeil 53 symbolisch angedeutet, Druckluft durch die Fluidzuleitung 47 in den Kammerhohlraum 25 eingeleitet, wodurch es wie durch die Pfeile 54 symbolisch angedeutet zu Verwirbelungen kommt und die überschüssige zumindest teilweise entspannte Luft bei dem mit 55 bezeichneten Pfeil aus der Fluidableitung 34 austritt. Die Kugeln bzw. Massenelemente 20 werden durch die Verwirbelungen mitgerissen und stoßen bei ihrer Flugbewegung gegen die Stirnwände 21, 23 sowie gegen die Zylinderwand 22 der Kammer an, wodurch Vibrationen innerhalb des Dosierlöffelstieles 5 erzeugt werden. Diese werden auf kurzem und insofern direktem Weg auf das Dosiergefäß 4 und über dessen sich zur Öffnung nach oben hin konisch erweiternde Innenwand 56 auf das darin befindliche Probenmaterial 51 übertragen, wodurch es schließlich zu der in Fig. 10 symbolisch durch eine größere Packungsdichte angedeuteten Verdichtung unter Abnahme des Schüttkegels 52 kommt. Bei dem in Fig. 10 gezeigten Verwendungsschritt wurde der pneumatische Vibrationsantrieb wieder abgeschaltet. Zur möglichst genauen volumetrischen Dosierung wird dabei der bei der Verdichtung noch verbliebende Schüttkegel 52 wahlweise mittels eines der beiden in Seitenrichtung ortsfesten Abstreifer 50 seitlich abgezogen, so dass das entsprechende Probenmaterial seitlich an dem Dosiergefäß herab in den Trichter 43 fällt und bspw. entsorgt werden kann. In dem gewählten Beispiel wird zur Erzielung der seitlichen Relativbewegung der Dosierlöffel 3 mit dem umgebenden Trichter 43 und daran befestigten Teilen aus der mit S markierten, in den Figuren 8 und 9 eingenommenen Startposition in Richtung des Pfeiles 57 seitlich verfahren, bis der gesamte Schüttkegel 52 an dem Abstreifer 50 abgestreift wurde. Figur 10 zeigt dabei eine mit dem Bezugszeichen Zw bezeichnete Zwischenstellung. Während der Verfahrbewegung befindet sich der obere Rand des Dosiergefäßes 4 bzgl. der Gefäßlängsachsenrichtung auf etwa gleicher Höhe wie die zugewandte Abstreifkante 61 des Abstreifers 50, wobei ein den Rand berührendes oder berührungsloses Abstreifen möglich ist. Der verbliebene Schüttkegel 52 wird während der Verfahrbewegung des Dosiergefäßes, 4 von der an die Kante 61 anschließenden Schrägfläche 62 verdrängt, wobei der von der Schrägfläche 62 mit einer horizontalen Bezugsebene eingeschlossene Winkel vorzugsweise im Bereich von 30 bis 60 Grad liegt. Figur 11 zeigt die Endposition der Verfahrbewegung in Richtung von Pfeil 57. Dabei handelt es sich um die mit den Bezugszeichen D gekennzeichnete sog. zentrale Dosierposition, in der das dosierte Material von der Dosiereinrichtung abgegeben wird. Dazu wird das Dosiergefäß 4 mittels des Drehantnebs 37 um eine halbe Umdrehung um die Drehachse 12 verschwenkt, so dass die Öffnung des Dosierbechers 8 nach unten weist und dessen Inhalt, d.h. das darin dosierte Probenmaterial 51, nach unten durch die Trichtermündung 58 in eine bereitgehaltene (nicht mit dargestellte) Aufnahme fällt. Um eine vollständige Entleerung des dosierten Materials aus dem Dosiergefäß, 4 zu unterstützen, besteht die Möglichkeit, währenddessen die pneumatische Vibrationseinrichtung erneut zu aktivieren, so dass auch ggf. an der Gefäßwand anhaftende Partikel leichter abgelöst werden. Die erfindungsgemäße Dosiereinrichtung 1 steht im Anschluss für einen weiteren Dosiervorgang zur Verfügung. Je nach Bedarf bzw. gewünschter Dosierungsmenge kann dazu das Dosiergefäß bspw. zunächst wieder in die in Fig. 8 gezeigte Ausgangslage bewegt und gedreht oder sogleich mit dem nach oben weisenden Dosierbecher 9 für einen weiteren Dosiervorgang in die Befüllungsposition S verfahren werden. Auch besteht die Möglichkeit, zuvor in den Trichter 43 Druckluft, die vorzugsweise durch einen Kanal 59 und einen Stutzen 60 zugeführt werden kann, einzublasen, um die Trichterinnenfläche 48 und das Dosiergefäß 4 zu reinigen.

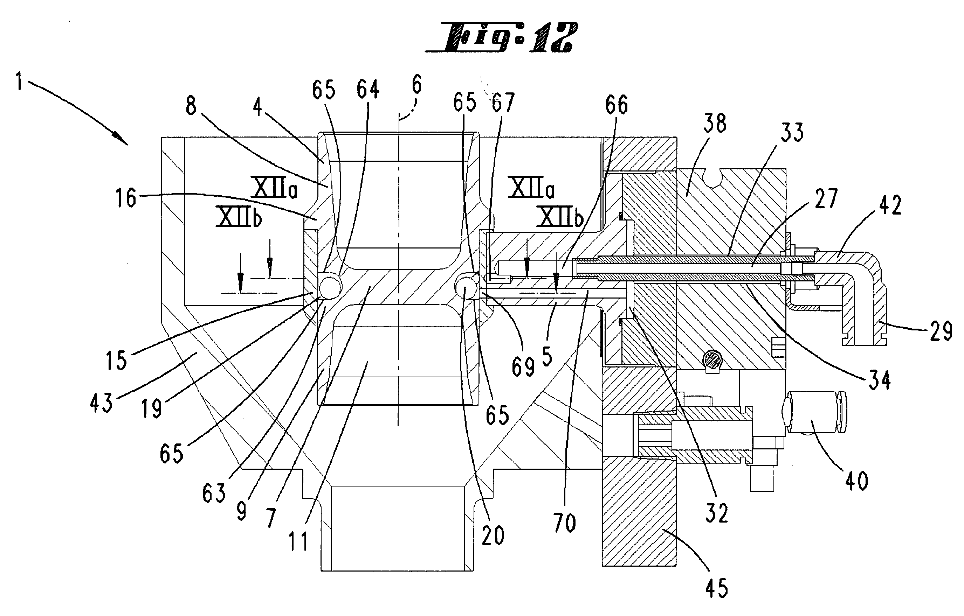

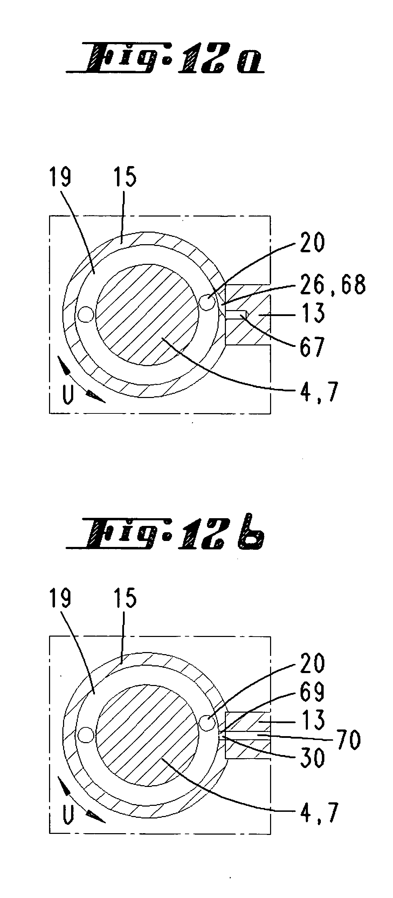

Figur 12 zeigt in einer Schnittansicht eine zweite bevorzugte Ausführungsform der erfindungsgemäßen Dosiereinrichtung 1. Abweichend von der zuvor beschriebenen ersten Ausführungsform erstreckt sich die Strömungskammer 19 in einer zu der Gefäßlängsachse 6 senkrechten Bezugsebene, vgl. Figs. 12a und 12b. Die Strömungskammer 19 besitzt insofern eine Längserstreckung entlang der Dosiergefäßumfangsrichtung U. Zur Bildung der Strömungskammer 19 ist in die zylindrische Außenwand 63 des Dosiergefäßes 4 auf Höhe des Zwischenbodens 7 eine ringartig durchgehende Nut eingebracht. Der Nutquerschnitt ist zur Gefäßlängsachse 6, d. h. nach radial innen gerichtet, halbkreisförmig ausgerundet. An den halbkreisförmigen Nutgrund 64 schließen nach radial auswärts zwei parallel beabstandete Ringflächen 65 an. Die radial äußere Berandung der Strömungskammer wird durch die zylindrische Hülse 15 gebildet, die im Bereich der Ringnut über die zylindrische Außenwand 63 geschoben und auf zeichnerisch nicht dargestellte Weise gegen die Außenwand 63 abgedichtet ist. Der Querschnitt der Strömungskammer 19 ähnelt somit dem Flächeninhalt eines auf der Seite liegenden U. Es wird noch angemerkt, dass trotz etwas von der ersten Ausführungsform abweichender Gestaltung für zueinander korrespondierende Einzelheiten zur besseren Übersicht die gleichen Bezugszeichen beibehalten werden. In die Strömungskammer 19 sind in dem in Figur 12 gezeigten Beispiel vor dem Aufschieben der Hülse 15 zwei kugelförmige Massenelemente 20 eingegeben worden. Der Radius des Nutgrundes 64 ist etwas größer als der Kugelradius der Massenelemente 20 bemessen, so dass die in Richtung der Gefäßlängsachse 6 gemessene Höhe der Strömungskammer 19 größer als der Kugeldurchmesser ist. Dazu quer, d. h. in Radialrichtung, ist auch der Abstand zwischen dem Scheitel des Nutgrunds 64 und der Innenseite der Hülse 15 etwas größer als der Kugeldurchmesser gewählt. Aus dem Vorangehenden folgt, dass die Massenelemente 20 innerhalb des Querschnitts der Strömungskammer 19 ein gewisses Verschiebungsspiel in beiden zuvor genannten Richtungen besitzen. Hinzu kommt die Bewegungsmöglichkeit der Massenelemente 20 in Umfangsrichtung U (vgl. Figuren 12a und 12b). Zur Zufuhr eines Druckfluids durch das Rohrelement 28 mündet dieses mit eingeschraubtem Gewindeende in eine sich axial im Dosierlöffelstiel 5 erstreckende Sacklochbohrung 66. Diese geht über in eine etwas seitlich versetzte Anschlussbohrung 67, welche in der Fluidzuleitung den Übergang zu dem Fluideinlass 26 bildet. Dieser umfasst gemäß Fig. 12a einen in die ringförmige Strömungskammer 19 mündenden Einlassabschnitt 68, dessen Längsrichtung erkennbar eine zu der Umfangsrichtung U der Strömungskammer tangentiale Komponente aufweist. In Figur 12b ist dargestellt, dass der Fluidauslass 30 einen von der Strömungskammer 19 ausgehenden Auslassabschnitt 69 aufweist, dessen Längsrichtung radial, d. h. senkrecht zur Umfangsrichtung U, verläuft. Der Auslassabschnitt 69 geht axial in eine Axialbohrung 70 über, die in die Umfangsöffnung 32 mündet und mit dem Ringspalt 33 die Fluidableitung 34 bildet. Zur Erzeugung von Vibrationen wird durch die Fluidzuleitung 27 ein Druckfluid, vorzugsweise Luft, in die ringförmige Strömungskammer 19 zugeführt. Die dortige Strömung weist eine Vorzugsrichtung auf, die mit Bezug auf Figur 12a entgegen dem Uhrzeigersinn gerichtet ist. Aufgrund der beschriebenen Dimensionierung des Strömungskammerquerschnitts werden die kugelförmigen Massenelemente 20 nicht nur im Kreis bewegt, sondern führen auch kurze, dazu quergerichtete Bewegungen aus, wobei sie Stöße auf die Wandung der Strömungskammer ausüben.

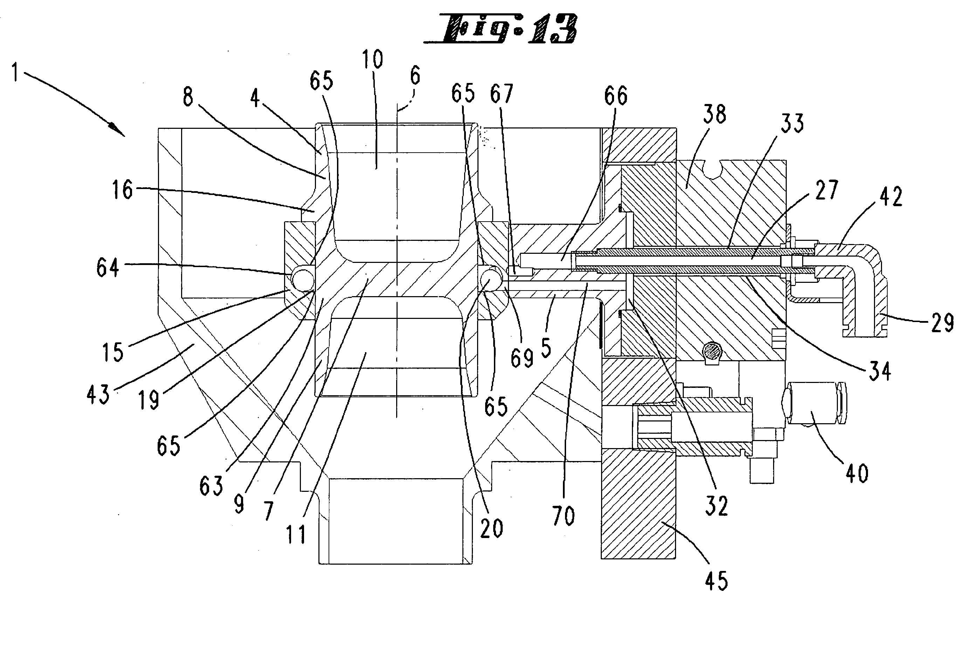

Figur 13 zeigt ein drittes bevorzugtes Ausführungsbeispiel der erfindungsgemäßen Dosiereinrichtung 1. Abweichend von Figur 12 ist dort die Ringnut der Strömungskammer 19 nicht in das Dosiergefäß 4, sondern in die aufgeschobene Hülse 15 eingelassen.

## Patentansprüche

1. Dosiereinrichtung zur Dosierung von rieselfähigem Material, insbesondere für eine Probenaufbereitungsvorrichtung zur Aufbereitung von rieselfähigem Probenmaterial, aufweisend zumindest ein Dosiergefäß und eine ihm zum Vibrationsantrieb zugeordnete Vibrationsantriebseinrichtung ,wobei die Dosiereinrichtung (1) einen Dosierlöffel (3) aufweist, der das Dosier gefäß (u) und einen davon ausgehenden Dosierlöffelstiel umfasst, **dadurch gekennzeichnet, dass** die Vibrationsantriebseinrichtung (18) zumindest eine Strömungskammer (19) und ein oder mehrere darin beweglich aufgenommene Massenelemente (20) umfasst, wobei die Strömungskammer (19) zumindest einen Fluideinlass (26) für zuströmendes Fluid und zumindest einen Fluidauslass (30) zum Entweichen des Fluids aufweist,
und die Strömungskammer (19) innerhalb des Dosierlöffelstieles (5), insbesondere benachbart zu und weiter insbesondere angrenzend an eine Wand des Dosiergefäßes (4), angeordnet ist, wobei der Fluideinlass (26) mit einer Fluidzuleitung (27) und der Fluidauslass (30) mit einer Fluidableitung (34) verbunden ist und wobei sich die Fluidzuleitung (27) und / oder die Fluidableitung (34) durch zumindest einen Längenabschnitt (13) des von dem Dosiergefäß (4) ausgehenden Dosierlöffelstiels (5) in dessen Längsrichtung (L) erstrecken.

2. Dosiereinrichtung zur Dosierung von rieselfähigem Material, insbesondere für eine Probenaufbereitungsvorrichtung zur Aufbereitung von rieselfähigem Probenmaterial, aufweisend zumindest ein Dosiergefäß und eine ihm zum Vibrationsantrieb zugeordnete Vibrationsantriebseinrichtung, wobei die Dosiereinrichtung einen Dosierlöffel aufweist, der das Dosiergefäß, und einen davon ausgehenden Dosierlöffelstiel umfasst, **dadurch gekennzeichnet, dass** die Vibrationsantriebseinrichtung (18) zumindest eine Strömungskammer (19) und ein oder mehrere darin beweglich aufgenommene Massenelemente (20) umfasst, wobei die Strömungskammer (19) zumindest einen Fluideinlass (26) für zuströmendes Fluid und zumindest einen Fluidauslass (30) zum Entweichen des Fluids aufweist, wobei das Dosiergefäß (4) zumindest einen, zu einer Gefäßlängsachse (6) insbesondere rotationssymmetrisch berandeten, Gefäßhohlraum (10, 11) aufweist und die Längserstreckung der Strömungskammer (19) entlang der Dosiergefäßumfangsrichtung (U) verläuft, wobei der Fluideinlass (26) mit einer Fluidzuleitung (27) und der Fluidauslass (30) mit einer Fluidableitung (34) verbunden ist und wobei sich die Fluidzuleitung (27) und / oder die Fluidableitung (34) durch zumindest einen Längenabschnitt (13) des von dem Dosiergefäß, (4) ausgehenden Dosierlöffelstiels (5) in dessen Längsrichtung (L) erstrecken.

3. Dosiereinrichtung nach Anspruch 1 oder Anspruch 2, **dadurch gekennzeichnet, dass** die Strömungskammer (19) mittels des Fluideinlasses (26) an eine Druckluftquelle, insbesondere an einen Druckluftspeicher oder an eine Druckluftzuleitung, angeschlossen ist.

4. Dosiereinrichtung nach einem oder mehreren der vorangehenden Ansprüche 1, 3, **dadurch gekennzeichnet, dass** die Strömungskammer (19) eine Kammerlängsachse (24) aufweist, die sich in Längsrichtung (L) des Dosierlöffelstiels (5) erstreckt, wobei der Kammerhohlraum (25) zu der Kammerlängsachse (24) insbesondere rotationssymmetrisch und insbesondere zylindrisch, berandet ist.

5. Dosiereinrichtung nach einem oder mehreren der vorangehenden Ansprüche 1, 3, 4, **dadurch gekennzeichnet, dass** das Dosiergefäß, (4) eine Gefäßlängsachse (6) aufweist, die sich quer zu der Kammerlängsachse (24) erstreckt, wobei zumindest ein Gefäßhohlraum (10, 11) zu der Gefäßlängsachse (6) insbesondere rotationssymmetrisch und insbesondere sich konisch erweiternd berandet ist.

6. Dosiereinrichtung nach einem oder beiden der vorangehenden Ansprüche 2 und 3, **dadurch gekennzeichnet, dass** sich die Strömungskammer (19) ringartig durchgehend entlang des gesamten Dosiergefäßumfangs längserstreckt.

7. Dosiereinrichtung nach einem oder mehreren der vorangehenden Ansprüche 2, 3, 6, **dadurch gekennzeichnet, dass** die Strömungskammer (19) von einem Boden des Dosiergefäßes (4), insbesondere von einem zwischen zwei Gefäßhohlräumen (10, 11) zweier Dosierbecher (8, 9) des Dosiergefäßes (4) liegenden Zwischenboden (7), berandet ist.

8. Dosiereinrichtung nach einem oder mehreren der vorangehenden Ansprüche 2, 3, 6, 7, **dadurch gekennzeichnet, dass** der Fluideinlass (26) einen in die ringförmige Strömungskammer (19) mündenden Einlassabschnitt (68) aufweist, dessen Längsrichtung eine zu der Umfangsrichtung (U) der Strömungskammer (19) tangentiale Komponente aufweist oder tangential zu der Umfangsrichtung verläuft.

9. Dosiereinrichtung nach einem oder mehreren der vorangehenden Ansprüche, **dadurch gekennzeichnet, dass** die Fluidzuleitung (27) ein Rohrelement (28) aufweist und dass die Fluidableitung (34) einen das Rohrelement konzentrisch umgebenden Ringspalt (33) aufweist.

10. Dosiereinrichtung nach einem oder mehreren der vorangehenden Ansprüche, **dadurch gekennzeichnet, dass** der Dosierlöffelstiel (5) um eine insbesondere horizontale Drehachse (12) drehbar gehalten ist.

11. Dosiereinrichtung nach einem oder mehreren der vorangehenden Ansprüche, **dadurch gekennzeichnet, dass** zur Drehung des Dosierlöffels (3) um dessen Drehachse (12) ein insbesondere pneumatischer, an dem Dosierlöffelstiel (5) angreifender Drehantrieb (37) vorgesehen ist, wobei sich die Fluidzuleitung (27) und / oder die Fluidableitung (34) durch den Drehantrieb (37) hindurch erstrecken.

12. Dosiereinrichtung nach einem oder mehreren der vorangehenden Ansprüche, **dadurch gekennzeichnet, dass** das oder die Massenelemente (20) hinsichtlich ihrer Größe so gewählt sind, dass das oder die Massenelemente (20) innerhalb der Strömungskammer (19) in mehreren, zueinander quer orientierten Bewegungsebenen beweglich, insbesondere translatorisch beweglich, sind.

13. Dosiereinrichtung nach einem oder mehreren der vorangehenden Ansprüche, **dadurch gekennzeichnet, dass** die Längserstreckung des Kammerhohlraumes (25) der Strömungskammer (19) in Richtung der Kammerlängsachse (24) oder in Dosiergefäßumfangsrichtung ein Mehrfaches, insbesondere das Zwei- bis Dreifache, der Abmessungen, insbesondere des Kammerhohlraumdurchmessers, des Kammerhohlraumquerschnitts quer zur Längserstreckungsrichtung beträgt.

14. Dosiereinrichtung nach einem oder mehreren der vorangehenden Ansprüche, **dadurch gekennzeichnet, dass** die Abmessungen des Kammerhohlraumquerschnitts, insbesondere der Kammerhohlraumdurchmesser, ein Mehrfaches, insbesondere das Zwei- bis Fünffache, der Abmessungen eines Massenelements (20), insbesondere des Durchmessers eines Massenelements (20), beträgt.

15. Probenaufbereitungsvorrichtung zur Aufbereitung von rieselfähigem Probenmaterial, aufweisend eine Dosiereinrichtung (1) nach einem oder mehreren der vorangehenden Ansprüche.

## Claims

1. Metering device for metering pourable material, in particular for a sample processing means for processing pourable sample material, comprising at least one metering vessel and a vibratory drive device associated therewith for vibratory driving, the metering device (1) comprising a metering scoop (3) which comprises the metering vessel (4) and a metering scoop arm projecting therefrom, **characterised in that** the vibratory drive device (18) comprises at least one flow chamber (19) and one or more mass members (20) movably received therein, the flow chamber (19) comprising at least one fluid inlet (26) for inflowing fluid and at least one fluid outlet (30) for discharging the fluid, and the flow chamber (19) is arranged inside the metering scoop arm (5), in particular close to and further in particular adjacent to a wall of the metering vessel (4), the fluid inlet (26) being connected to a fluid feed line (27) and the fluid outlet (30) being connected to a fluid discharge line (34) and the fluid feed line (27) and/or the fluid discharge line (34) extending through at least one longitudinal portion (13) of the metering scoop arm (5) projecting from the metering vessel (4) in the longitudinal direction (L) of said arm.

2. Metering device for metering pourable material, in particular for a sample processing means for processing pourable sample material, comprising at least one metering vessel and a vibratory drive device associated therewith for vibratory driving, the metering device comprising a metering scoop which comprises the metering vessel and a metering scoop arm projecting therefrom, **characterised in that** the vibratory drive device (18) comprises at least one flow chamber (19) and one or more mass members (20) movably received therein, the flow chamber (19) comprising at least one fluid inlet (26) for inflowing fluid and at least one fluid outlet (30) for discharging the fluid, the metering vessel (4) comprising at least one vessel cavity (10, 11) being defined, in particular rotationally symmetrically, about a longitudinal axis (6) of the vessel and the longitudinal extension of the flow chamber (19) extending along the peripheral direction (U) of the metering vessel, the fluid inlet (26) being connected to a fluid feed line (27) and the fluid outlet (30) being connected to a fluid discharge line (34) and the fluid feed line (27) and/or the fluid discharge line (34) extending through at least one longitudinal portion (13) thereof, of the metering scoop arm (5) projecting from the metering vessel (4) in the longitudinal direction (L) of said arm.

3. Metering device according to either claim 1 or claim 2, **characterised in that** the flow chamber (19) is connected via the fluid inlet (26) to a source of compressed air, in particular to a compressed air store or to a compressed air feed line.

4. Metering device according to one or more of the preceding claims 1, 3, **characterised in that** the flow chamber (19) has a longitudinal axis (24) which extends in the longitudinal direction (L) of the metering scoop arm (5), the chamber cavity (25) being defined, in particular rotationally symmetrically and in particular cylindrically, about the longitudinal axis (24) of the chamber.

5. Metering device according to one or more of the preceding claims 1, 3, 4, **characterised in that** the metering vessel (4) has a longitudinal axis (6) which extends transverse to the longitudinal axis (24) of the chamber, at least one vessel cavity (10, 11) being defined, in particular rotationally symmetrically and in particular with a conical enlargement, about the longitudinal axis (6) of the vessel.

6. Metering device according to either or both of the preceding claims 2 and 3, **characterised in that** the flow chamber (19) extends longitudinally in a continuous annular manner along the entire periphery of the metering vessel.

7. Metering device according to one or more of the preceding claims 2, 3, 6, **characterised in that** the flow chamber (19) is defined by a base of the metering vessel (4), in particular by an intermediate base (7) situated between two vessel cavities (10, 11) of two metering cups (8, 9) of the metering vessel (4).

8. Metering device according to one or more of the preceding claims 2, 3, 6, 7, **characterised in that** the fluid inlet (26) comprises an inlet portion (68) opening into the annular flow chamber (19), the longitudinal direction of said inlet portion having a component tangential to the peripheral direction (U) of the flow chamber (19) or said longitudinal direction extending tangentially to the peripheral direction.

9. Metering device according to one or more of the preceding claims, **characterised in that** the fluid feed line (27) comprises a tube member (28) and **in that** the fluid discharge line (34) comprises an annular gap (33) concentrically surrounding the tube member.

10. Metering device according to one or more of the preceding claims, **characterised in that** the metering scoop arm (5) is held rotatably about a rotational axis (12), in particular a horizontal rotational axis.

11. Metering device according to one or more of the preceding claims, **characterised in that** a rotary drive (37), in particular a pneumatic rotary drive, which engages with the metering scoop arm (5) is provided for rotating the metering scoop (3) about the rotational axis (12) thereof, the fluid feed line (27) and/or the fluid discharge line (34) extending through the rotary drive (37).

12. Metering device according to one or more of the preceding claims, **characterised in that** the mass member(s) (20) are selected in terms of their size in such a way that the mass member(s) (20) can be moved in a plurality of mutually transversely orientated movement planes, in particular can be moved in a translator manner, inside the flow chamber (19).

13. Metering device according to one or more of the preceding claims, **characterised in that**, in the direction of the longitudinal axis (24) of the chamber or in the peripheral direction of the metering vessel, the longitudinal extension of the chamber cavity (25) of the flow chamber (19) is a multiple of, in particular two or three times, the dimensions, in particular of the diameter of the chamber cavity, of the cross-section of the chamber cavity transverse to the longitudinal extension direction.

14. Metering device according to one or more of the preceding claims, **characterised in that** the dimensions of the cross-section of the chamber cavity, in particular the diameter of the chamber cavity, are a multiple of, in particular two to five times, the dimensions of a mass member (20), in particular the diameter of a mass member (20).

15. Sample processing means for processing pourable sample material, comprising a metering device (1) according to one or more of the preceding claims.

## Revendications

1. Dispositif de dosage destiné au dosage de matériaux coulants, en particulier pour un dispositif de préparation d'échantillons destiné à la préparation de matériaux d'échantillons coulants, présentant au moins un récipient de dosage et un entraînement en vibrations qui lui est associé pour assurer l'entraînement en vibrations, le dispositif de dosage (1) présentant une cuillère de dosage (3) qui comprend le récipient de dosage (4) et un manche de cuillère de dosage partant de celui-ci, **caractérisé en ce que** l'entraînement en vibrations (18) comprend au moins une chambre d'écoulement (19) et un ou plusieurs éléments de masse (20) logés de manière mobile dedans, la chambre d'écoulement (19) présentant au moins une entrée de fluide (26) pour le fluide qui afflue et au moins une sortie de fluide (30) pour l'évacuation du fluide, et la chambre d'écoulement (19) étant agencée à l'intérieur du manche de cuillère de dosage (5), en particulier avoisinante et plus particulièrement adjacente à une paroi du récipient de dosage (4), l'entrée de fluide (26) étant reliée à une conduite d'alimentation en fluide (27) et la sortie de fluide (30) à une conduite d'évacuation de fluide (34) et la conduite d'alimentation en fluide (27) et/ou la conduite d'évacuation de fluide (34) s'étendant à travers au moins une section longitudinale (13) du manche de cuillère de dosage (5) partant du récipient de dosage (4) dans la direction longitudinale (L) de celui-ci.

2. Dispositif de dosage destiné au dosage de matériaux coulants, en particulier pour un dispositif de préparation d'échantillons pour la préparation de matériaux d'échantillons coulants, présentant au moins un récipient de dosage et un entraînement en vibrations qui lui est associé pour assurer l'entraînement en vibrations, le dispositif de dosage présentant une cuillère de dosage qui comprend le récipient de dosage et un manche de cuillère de dosage partant de celui-ci, **caractérisé en ce que** l'entraînement en vibrations (18) comprend au moins une chambre d'écoulement (19) et un ou plusieurs éléments de masse (20) logés de manière mobile dedans, la chambre d'écoulement (19) présentant au moins une entrée de fluide (26) pour le fluide qui afflue et au moins une sortie de fluide (30) pour l'évacuation du fluide, le récipient de dosage (4) présentant au moins un espace creux de récipient (10, 11) délimité notamment de manière symétrique en rotation par rapport à un axe longitudinal de récipient (6) et l'étendue longitudinale de la chambre d'écoulement (19) s'étendant le long de la direction périphérique du récipient de dosage (U), l'entrée de fluide (26) étant reliée à une conduite d'alimentation en fluide (27) et la sortie de fluide (30) à une conduite d'évacuation de fluide (34) et la conduite d'alimentation en fluide (27) et/ou la conduite d'évacuation de fluide (34) courant à travers au moins une section longitudinale (13) du manche de cuillère de dosage (5) partant du récipient de dosage (4) dans la direction longitudinale (L) de celui-ci.

3. Dispositif de dosage selon la revendication 1 ou la revendication 2, **caractérisé en ce que** la chambre d'écoulement (19) est raccordée au moyen de l'entrée de fluide (26) à une source d'air comprimé, en particulier à un dispositif d'accumulation d'air comprimé ou à une conduite d'air comprimé.

4. Dispositif de dosage selon l'une ou plusieurs des revendications précédentes 1, 3, **caractérisé en ce que** la chambre d'écoulement (19) présente un axe longitudinal de chambre (24) qui s'étend dans la direction longitudinale (L) du manche de cuillère de dosage (5), l'espace creux de chambre (25) étant délimité en particulier de manière symétrique en rotation et en particulier de manière cylindrique par rapport à l'axe longitudinal de chambre (24).

5. Dispositif de dosage selon l'une ou plusieurs des revendications précédentes 1, 3, 4, **caractérisé en ce que** le récipient de dosage (4) présente un axe longitudinal de récipient (6) qui s'étend transversalement par rapport à l'axe longitudinal de chambre (24), au moins un espace creux de récipient (10, 11) étant délimité en particulier de manière symétrique en rotation et en particulier en s'élargissant de manière conique par rapport à l'axe longitudinal de récipient (6).

6. Dispositif de dosage selon l'une ou les deux des revendications précédentes 2 et 3, **caractérisé en ce que** la chambre d'écoulement (19) s'étend longitudinalement de manière annulaire et de bout à bout le long de toute la périphérie du récipient de dosage.

7. Dispositif de dosage selon l'une ou plusieurs des revendications précédentes 2, 3, 6, **caractérisé en ce que** la chambre d'écoulement (19) est délimitée par un fond du récipient de dosage (4), en particulier par un fond intermédiaire (7) situé entre deux espaces creux de récipient (10, 11) de deux béchers de dosage (8, 9) du récipient de dosage (4).

8. Dispositif de dosage selon l'une ou plusieurs des revendications précédentes 2, 3, 6, 7, **caractérisé en ce que** l'entrée de fluide (26) présente une section d'entrée (68) débouchant dans la chambre d'écoulement annulaire (19), dont la direction longitudinale présente une composante tangentielle à la direction périphérique (U) de la chambre d'écoulement (19) ou court de manière tangentielle à la direction périphérique.

9. Dispositif de dosage selon l'une ou plusieurs des revendications précédentes, **caractérisé en ce que** la conduite d'alimentation en fluide (27) présente un élément tubulaire (28) et **en ce que** la conduite d'évacuation de fluide (34) présente un espace annulaire (33) entourant de manière concentrique l'élément tubulaire.

10. Dispositif de dosage selon l'une ou plusieurs des revendications précédentes, **caractérisé en ce que** le manche de cuillère de dosage (5) est maintenu rotatif autour d'un axe de rotation (12) en particulier horizontal.

11. Dispositif de dosage selon l'une ou plusieurs des revendications précédentes, **caractérisé en ce que** pour la rotation de la cuillère de dosage (3) autour de son axe de rotation (12) un entraînement en rotation (37) en particulier pneumatique se fixant sur le manche de cuillère de dosage (5) est prévu, la conduite d'alimentation en fluide (27) et/ou la conduite d'évacuation de fluide (34) s'étendant à travers l'entraînement en rotation (37).

12. Dispositif de dosage selon l'une ou plusieurs des revendications précédentes, **caractérisé en ce que** le ou les éléments de masse (20) sont choisis au regard de leur taille de sorte que le ou les éléments de masse (20) soient mobiles, en particulier mobiles de manière translationnelle, dans plusieurs plans orientés transversalement les uns par rapport aux autres à l'intérieur de la chambre d'écoulement (19).

13. Dispositif de dosage selon l'une ou plusieurs des revendications précédentes, **caractérisé en ce que** l'étendue longitudinale de l'espace creux de chambre (25) de la chambre d'écoulement (19) dans la direction de l'axe longitudinal de chambre (24) ou dans la direction périphérique du récipient de dosage est un multiple, en particulier du double au triple, des dimensions, en particulier du diamètre d'espace creux de chambre, de la section d'espace creux de chambre transversalement par rapport à la direction d'étendue longitudinale.

14. Dispositif de dosage selon l'une ou plusieurs des revendications précédentes, **caractérisé en ce que** les dimensions de la section d'espace creux de chambre, notamment le diamètre d'espace creux de chambre, est un multiple, en particulier du double au quintuple, des dimensions d'un élément de masse (20), en particulier du diamètre d'un élément de masse (20).

15. Dispositif de préparation d'échantillons destiné à la préparation de matériaux d'échantillons coulants, présentant un dispositif de dosage (1) selon l'une ou plusieurs des revendications précédentes.
